# EUROPÄISCHE PATENTSCHRIFT

(11) **EP 2 990 711 B1**
(45) Veröffentlichungstag und Bekanntmachung des Hinweises auf die Patenterteilung: **29.11.2017**
(21) Anmeldenummer: 15001792.9
(22) Anmeldetag: 17.06.2015
(51) Int. Cl.: F16L 58/18, F16L 59/16, F16L 59/20, F16J 15/14

(54) **GEHÄUSEANORDNUNG FÜR EINE ROHRVERBINDUNG SOWIE VERFAHREN ZUM SCHUTZ VON ROHRVERBINDUNGEN**
HOUSING ASSEMBLY FOR A PIPE CONNECTION AND METHOD FOR PROTECTION OF PIPE JOINTS
SYSTÈME DE BOÎTIER POUR UN RACCORD DE TUYAUTERIE ET PROCÉDÉ DE PROTECTION DE RACCORDS DE TUYAUTERIE

(30) Priorität: 27.08.2014 CH 12942014
(43) Veröffentlichungstag der Anmeldung: 02.03.2016
(73) Patentinhaber: Brugg Rohr AG Holding, 5200 Brugg (CH)
(72) Erfinder: Werner, Schaller, 5212 Hausen (CH); Kress, Jürgen, 8966 Oberwil-Lieli (CH); Meyer, Michael, 85072 Eichstätt (DE); Kirsch, Stefan, 91560 Heilsbronn (DE)
(74) Vertreter: Schalch, Rainer

(56) Entgegenhaltungen:
- EP-A1- 0 188 363
- EP-A1- 0 994 287
- WO-A1-2008/019790
- CH-A1- 706 907
- GB-A- 1 058 454

## Beschreibung

### Gebiet der Erfindung

Die Erfindung betrifft eine Gehäuseanordnung gemäss Oberbegriff des Anspruchs 1. Ferner betrifft die Erfindung ein Verfahren zum Schutz der Verbindung von wärmegedämmten, erdverlegten Rohren. Weiter betrifft die Erfindung eine Dichtung für eine Gehäuseanordnung bzw. zur Durchführung des Verfahrens.

### Hintergrund

Zum Transport temperierter Medien findet eine Vielzahl von Arten von Verbundrohren Anwendung. Diese zeichnen sich dadurch aus, dass mindestens ein mediumführendes Innenrohr von einem thermisch isolierenden Material umgeben ist. Auf der Aussenseite dieses Materials befindet sich ein Mantel, der meist aus Polyethylen (PE) gefertigt ist. Ein Beispiel sind sogenannte Kunststoffmantelrohre (KMR). Diese finden häufig Anwendung in der Fernwärme und bestehen aus einem Innenrohr aus Stahl, welches mit einem Polyurethan (PU) Hartschaum umgeben ist, auf welchem sich ein mehrerer Millimeter dicker Mantel aus Polyethylen befindet. Als Beispiel kann auf die EP-2404733A verwiesen werden. Die Verbindung solcher KMR erfolgt zunächst durch Verschweissen der metallischen Innenrohre. Anschliessend wird eine Muffe über die Endabschnitte der Aussenmäntel der beiden Rohre gezogen und dauerhaft mit diesen verbunden. Diese Verbindung wird durch Schrumpfung der Muffe mit Hilfe eines Brenners oder durch Elektroverschweissung des PE-Materials der Muffe mit dem PE-Materials des Aussenmantels erzeugt. Als letzter Schritt wird der verbleibende Hohlraum mit einem PU Schaum ausgefüllt, dessen flüssige Einzelkomponenten im noch nicht reagierten Zustand durch ein Loch in der Muffe eingefüllt werden. Die Reaktion erfolgt dann innerhalb des Hohlraums und schäumt diesen aus. Bei sachgerechter Anwendung liefert dieses Verfahren sehr dichte Verbindungen, d.h. Wasser, welches aus dem Erdreich die Rohrverbindung unter Druck beaufschlagt, kann erfolgreich am Eindringen gehindert werden. Diese Forderung ist spezifiziert in der EN489:2009, welche festlegt, dass während 24 Stunden kein Wasser eindringen darf, wenn die Rohrverbindung mit Wasser unter einem Druck von 30 kPa beaufschlagt wurde.

Eine spezielle Klasse von isolierten Rohren sind flexible Rohrsysteme, welche sich dadurch auszeichnen, dass sie mit einem gewissen Kraftaufwand vor Ort an der Baustelle gebogen werden können. Beispiele für solche Rohrtypen mit Innenrohren aus Kunststoff finden sich in EP-0897788A und EP-2404733A. Für solche Rohrsysteme gibt es alternative Verbindungstechniken zu der oben beschriebenen Rohrverbindung. Zunächst werden der Aussenmantel und die Isolationsschicht von den Endabschnitten der beiden Rohre entfernt, so dass die Innenrohre frei liegen. Dann erfolgt das Aufschieben von sogenannten Dichtringen auf die Aussenmäntel und die Verbindung der Innenrohre mit Hilfe von Fittings. Der ganze Verbund inklusive der Dichtringe wird anschliessend in eine Konstruktion aus zwei zueinander gehörenden Halbschalen eingepasst und die beiden Halbschalen werden form- und kraftschlüssig miteinander verbunden. Abschliessend erfolgt die Ausschäumung des entstandenen Hohlraums. Solche Halbschalen, Dichtringe und Verfahren sind beschrieben in DE-8033089U, EP-2057398A, WO 2014/032194, WO 2008/019790 und WO 2007/004870. CH-706907A zeigt Dichtringe, die innerhalb der Halbschalen zwei Dichtlippen aufweisen, die an verschiedenen Stellen am Rohr anliegen.

In diesen Fällen wird die Dichtwirkung nicht dadurch erreicht, dass ein polymeres Material aufgeschrumpft oder verschweisst wird. Die Dichtwirkung muss vielmehr durch die spezielle Konstruktion und die Verwendung aufeinander abgestimmter Werkstoffe sichergestellt werden. Es ist wichtig festzuhalten, dass für die Dichtigkeit eines solchen Systems ein von der Innenseite wirkender Druck notwendig ist, der die am Dichtring anliegende innenliegende Dichtlippe gegen den PE-Aussenmantel des Rohrs presst. Dieser Druck wird während der Nachisolation durch den entstehenden Schaum erzeugt.

Wichtige Funktionen der Halbschalen sind der mechanische Schutz der miteinander verbundenen Rohrabschnitte im Erdreich, die thermische Isolierung der miteinander verbundenen Rohrabschnitte zur Minimierung von Energieverlusten und die Verhinderung des Eindringens von Feuchtigkeit, die die Wärmeleitfähigkeit unzulässig erhöhen könnte und zu Korrosion der Fittings führen kann, welche aus Metall gefertigt sein können.

Der entstandene Hohlraum wird üblicherweise durch Ausschäumen mit einem Zweikomponentensystem (2K) bestehend aus einer isocyanathaltigen Komponente und einer Polyolkomponente ausgefüllt. Insbesondere das Isocyanat ist problematisch. In einigen Ländern gibt es spezielle Regelungen zur Handhabung solcher Rohstoffe. So dürfen z. B. in Schweden derzeit nur Monteure solche Schäume verarbeiten, welche eine besondere Ausbildung nachweisen können. Dadurch ist die Flexibilität bei der Montage reduziert. Hintergrund solcher Regelungen ist die mögliche Gefahr der Sensibilisierung durch Isocyanat, welche bei regelmässigen Gebrauch und entsprechend disponierten Personen auftreten kann. Ferner müssen Isocyanate beim Transport als Gefahrgut gehandhabt werden, wodurch erheblich höhere Kosten entstehen.

Um diese Probleme zu umgehen, wird von der Möglichkeit Gebrauch gemacht, den verbleibenden Hohlraum durch vorgefertigte Formstücke auszufüllen. Es sind z. B. Halbschalen aus PU-Hartschaum verfügbar, welche in die Kunststoff Halbschalen eingesetzt werden. Auch dies ermöglicht noch eine gute Wärmedämmung, aber die Halbschalen haben ein gewisses Spiel und können keinen Druck auf die innenliegende Dichtlippe ausüben. Deshalb besteht hier die Gefahr, dass Wasser von aussen eindringen kann wenn der Druck entsprechend hoch ist, weil der Druck des Schaums auf die Dichtlippe fehlt, welche am Dichtring befestigt ist.

### Darstellung der Erfindung

Der Erfindung liegt die Aufgabe zu Grunde einen Schutz erdverlegter Rohre an der Verbindungsstelle von zwei oder mehreren Rohren zu schaffen. Der Schutz soll sicher verhindern, dass Wasser aus dem Erdreich an die Verbindungsstelle der Rohre gelangt. Insbesondere soll die Dichtigkeit gegen eindringende Feuchtigkeit der Norm EN489:2009 genügen, unabhängig davon wie eine Wärmdämmung ausgeführt ist. Die Handhabung des Schutzes soll einfach sein.

Diese Aufgabe wird mit einer Gehäuseanordnung der eingangs genannten Art gelöst, bei welcher die Dichtungen jeweils mindestens ein zweites ringförmiges Dichtelement aufweisen, welches zur Beaufschlagung der Rohraussenseite des jeweiligen Rohrs ausserhalb des Gehäuses bestimmt und angeordnet ist.

Die ringförmigen Dichtungen weisen somit zwei Dichtelemente auf, welche das durch die ringförmige Dichtung führende wärmegedämmte Rohr an dessen Aussenmantel bündig umschliessen. Das erste Dichtelement befindet sich im Innenraum des durch die Halbschalen erzeugten Gehäuses und beaufschlagt das Rohr im Gehäuse, das zweite Dichtelement wirkt ausserhalb des Gehäuses bzw. beaufschlagt das Rohr ausserhalb des Gehäuses.

Es hat sich gezeigt, dass mit einem nach aussen gerichteten zweiten Dichtelement auch dann das Eindringen von Wasser in das durch die Schalen gebildete Gehäuse bzw. in dessen Hohlraum verhindert werden kann, wenn von innen überhaupt kein Innendruck durch PU-Schaum gegen die innen liegende Dichtlippe vorhanden ist. Das zweite bzw. äussere Dichtelement wird mit solcher Härte und Elastizität ausgeführt, dass es sich beim Anlegen der Dichtung um den Aussenmantel des Rohrs mit einer genügend hohen Spannung an den Aussenmantel anschmiegt, so dass eine druckwasserdichte Dichtung am Rohr gegen Wasser aus dem Erdreich erzielt wird. Somit kann auch ein von aussen anliegender hoher Wasserdruck nicht dazu führen, dass Feuchtigkeit in das Gehäuse eindringt. Insbesondere ist für das zweite Dichtelement und insbesondere für beide Dichtelemente vorgesehen, dass diese eine Shore-D Härte im Bereich von 10 bis 50 und insbesondere eine Shore-D Härte von 20 bis 35 aufweisen. Als Material für die Dichtelemente ist insbesondere Ethylen-Propylen-Dien-Kautschuk (EPDM) oder ein thermoplastisches Elastomer (TPE) bevorzugt. Das zweite Dichtelement wird so dimensioniert, dass es eine genügend lange Dichtungsstrecke bildet und somit über eine entsprechend lange Strecke am Aussenmantel des Rohrs anliegt. Bei einem gewellten Rohr kann die Dichtung insbesondere so dimensioniert sein, dass deren zweites Dichtelement bzw. die Dichtlippe mindestens über die Länge einer Halbwelle am Aussenmantel des Rohrs anliegt. Diese Ausgestaltung kann auch für das erste Dichtelement gewählt werden.

Während der Montage ist das zweite bzw. äussere Dichtelement bzw. die zweite Dichtlippe bevorzugterweise nach aussen bzw. in der Schnittdarstellung der Figuren nach oben geklappt, so dass die Dichtung ohne Behinderung durch das Dichtelement auf den Aussenmantel des Verbundrohrs aufgeschoben werden kann bzw. so dass zur Montage kein Spezialwerkzeug notwendig ist, welches das zweite Dichtelement während der Montage so aufweitet, dass es über das Rohr geschoben werden kann.

Die Lösung ist gesundheitlich unbedenklich weil zur Funktionstüchtigkeit des Systems kein Innendruck von der Innenseite auf die Dichtungen einwirken muss, um die Dichtigkeit zu gewährleisten. Deshalb kann auf die Verwendung von isocyanathaltigen Komponenten verzichtet werden. Der Hohlraum des Gehäuses kann entweder unausgefüllt bleiben oder mit vorgefertigten Formteilen versehen werden. Beim Vorsehen von Einfüllöffnungen am Gehäuse ist aber ein Ausschäumen des Hohlraums dennoch möglich, wenn dies trotzdem erwünscht ist. Die Tatsache, dass die Schäumung nicht notwendig ist, um die Dichtigkeit zu gewährleisten, hat auch noch den positiven Aspekt, dass dadurch die Montage des Gesamtsystems deutlich vereinfacht wird. Das Anmischen des 2K Systems (Polyol/Isocyanat) und das Einfüllen in die Halbschale benötigen eine gewisse Arbeitszeit. Zudem besteht bei der Montage speziell bei tieferen Temperaturen, das generelle Problem, dass die Schäumungsreaktion nicht schnell genug anspringt oder im Extremfall den vorhandenen Hohlraum nur unvollständig ausschäumt.

Der Erfindung liegt weiter die Aufgabe zu Grunde ein Verfahren zum Schutz der Verbindung von wärmegedämmten, erdverlegten Rohren, welche mindestens ein Innenrohr, eine Wärmedämmung und einen Aussenmantel aufweisen.

Diese Aufgabe wird mit einem Verfahren gemäss Anspruch 8 gelöst. Es zeigt sich, dass damit dauerhaft gegen Wasser aus dem Erdreich geschützte Rohrverbindungen erzielbar sind.

Insbesondere ermöglicht die vorliegende Erfindung, dass der Gehäusehohlraum zwischen den Abdeckungsschalen und dem Rohr nicht mit Wärmedämmmaterial gefüllt werden muss, um die erwünschte Dichtigkeit zu erzielen. Dies ergibt die vorgenannten Vorteile. Es kann aber vorgesehen sein, dass der Gehäusehohlraum zwischen den Abdeckungsschalen und dem Rohr mindestens teilweise mit vorgeformten Wärmedämmteilen gefüllt wird. Alternativ kann der Gehäusehohlraum zwischen den Abdeckungsschalen und dem Rohr mit einem schaumbildenden Wärmedämmmaterial gefüllt werden. Eine mögliche Ausführung einer Dichtung einer Gehäuseanordnung gemäss einem der Ansprüche 1 bis 7 wird durch die Merkmale des Anspruchs 13 spezifiziert.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1 eine Abdeckungsschale einer Gehäuseanordnung in schaubildlicher Ansicht;
Figur 2 ein Beispiel für eine Dichtung der Gehäuseanordnung in einer Vertikalschnittansicht, wobei bei dieser und den folgenden Figuren jeweils nur eine Teildarstellung der Dichtungen und ggf. der Rohre und der Abdeckungsschale oberhalb der Mittellängsachse M gezeigt ist und wobei die Dichtungen und Rohre um die Mittellängsachse M herum rotationssymmetrisch ausgestaltet sind;
Figur 3 ein weiteres Beispiel für eine Dichtung;
Figur 4 die Dichtung von Figur 2 mit umgestülptem Dichtelement;
Figur 5 eine Schnittdarstellung der Dichtung von Figur 2 mit einem Rohr, auf welches die Dichtung aufgeschoben worden ist; und
Figur 6 die Gehäuseanordnung mit der Dichtung und dem Rohr gemäss Figur 5 mit der äusseren Dichtung in Wirkungsstellung.

### Weg(e) zur Ausführung der Erfindung

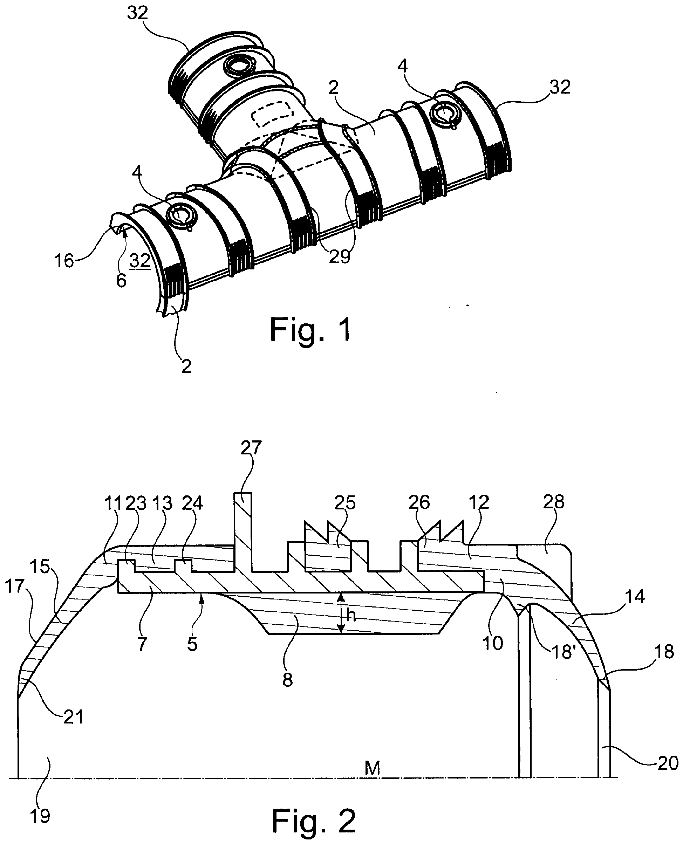

Figur 1 zeigt eine der Abdeckungsschalen 2 eines Ausführungsbeispiels der Gehäuseanordnung in schaubildlicher Darstellung. Zwei derartige Schalen 2, die aneinander liegend befestigt werden, decken die miteinander verbundenen Rohre bzw. die Rohrverbindung ab und bilden ein Gehäuse für die miteinander verbundenen Rohre im Bereich der Verbindungsstelle. Das Gehäuse bzw. die Schalen sind so dimensioniert, dass die Rohre bei geschlossenem Gehäuse einen vorbestimmten Abstand zur Gehäuseinnenwand haben. Die zweite Schale 2 ist in Figur 1 nur durch einen kleinen Abschnitt der Schale angedeutet, welcher bei dem einen Eintritt 32 für ein Rohr in das von den Schalen gebildete Gehäuse eingezeichnet ist. Derartige Abdeckungsschalen sind bereits bei Isoliervorrichtungen in Gebrauch, wie aus WO 2008/019790 bekannt, auf welche hier für die Ausgestaltung der Schalen und deren Befestigung aneinander verwiesen wird. Die in Figur 1 als Beispiel gezeigte Abdeckungsschale 2 besitzt eine T-Form zur Abdeckung einer 90°-Abzweigung einer Rohrleitung bzw. zur Bildung eines T-förmigen Gehäuses für eine solche Abzweigung. Es ist auch möglich, dass die Abdeckungsschale kreuzförmig zur Abdeckung zweier gegenüberliegender 90°-Abzweigungen ausgeführt ist. Die Abdeckungsschale kann auch gerade oder bogenförmig zur Abdeckung einer gerade oder bogenförmig verlaufenden Verbindung zweier Rohre ausgeführt sein. Die Schalen können zwei getrennte Schalen sein oder auch über ein gemeinsames Scharnier an einer gemeinsamen Längsseite bereits eine dauerhafte Verbindung miteinander besitzen, wobei das Scharnier das Öffnen und Schliessen der Schalen erlaubt. Die Abdeckungsschalen können z.B. aus Acrylnitril-Butadien-Styrol (ABS) in einem Spritzgiessprozess hergestellt werden. Die Abdeckungsschale 2 bzw. das zwei solche Schalen umfassende Gehäuse weist vorzugsweise eine Mehrzahl von Versteifungsrippen 29 auf. Mit der vorliegenden Gehäuseanordnung kann auf eine Wärmedämmung verzichtet werden oder es können Wärmedämmungselemente in das Gehäuse der Gehäuseanordnung eingelegt werden. Es ist aber grundsätzlich auch möglich eine Ausschäumung des Gehäuses vorzusehen. Für diesen Fall sind in diesem Beispiel drei Einfüllöffnungen 4 für das in das Gehäuse einzubringende schaumbildende Isolationsmaterial vorgesehen.

Die die Abdeckungsschalen 2 aufweisende Gehäuseanordnung 1 umfasst ferner Dichtungen 5, die an den Eintritten 32 der Rohre in das von den Schalen gebildete Gehäuse 3 angeordnet sind. Dazu ist es bevorzugt, dass die Abdeckungsschalen jeweils an jedem Eintritt 32 eine Aufnahme 6 aufweisen, welche zur Positionierung der jeweiligen Dichtung 5 dient. Diese Aufnahme 6 kann in einer einfachen Ausgestaltung von einem Abschnitt der Innenwand der Abdeckungsschale 2 beim jeweiligen Eintritt 32 gebildet sein, welcher mit seinem Innendurchmesser an die Dichtung angepasst ist und von einem Anschlag 16, welcher die Dichtung daran hindert, aus dem Gehäuse 3 heraus geschoben zu werden, wenn die beiden Abdeckungsschalen 2 bzw. das Gehäuse geschlossen sind. Die Aufnahme 6 kann aber auch nutenförmig gebildet sein, wobei eine weiter innen im Gehäuse 3 liegende Ausformung zusammen mit dem Anschlag 16 eine Nut bildet in welche die Dichtung eingelegt werden kann und in welcher die Dichtung gegen Verschiebung in der jeweiligen Längsrichtung der Rohre bzw. in Richtung der Mittellängsachse M der Figuren 2 bis 6 in beide Richtungen gesichert ist und nicht nur gegen ein Herausschieben aus dem Gehäuse. Die Dichtungen, welche nachfolgend genauer beschrieben werden, werden vor der Verbindung der Rohre auf die zu verbindenden Rohre aufgebracht. Bei der Montage der Gehäuseanordnung können dann diese Dichtungen beim Einlegen der verbundenen Rohre in die eine Abdeckungsschale, welches in der Regel zunächst die im Erdreich untere Abdeckungsschale ist, so angeordnet bzw. auf den Rohren verschoben werden, dass der entsprechende Teil der jeweiligen Dichtung, der in die Aufnahme 6 zu liegen kommen soll tatsächlich in der Aufnahme 6 zu liegen kommt und dort formschlüssig oder allenfalls kraftschlüssig gegen Verschiebung in Rohrlängsrichtung gehalten wird. Danach wird die zweite, insbesondere die obere, Abdeckungsschale angebracht, wobei auch deren Aufnahmen 6 mit den jeweiligen Dichtungen in formschlüssige Verbindung kommen. In der Folge werden die beiden Abdeckungsschalen aneinander befestigt und das Gehäuse 3 damit geschlossen. Wird keine Wärmedämmung vorgesehen, so ist der Vorgang damit beendet. Wird eine Wärmedämmung mit einzelnen Wärmedämmungselementen vorgesehen, so werden diese während des erläuterten Vorgangs und vor dem Schliessen in die Schalen eingelegt. Dabei werden in der Regel die Wärmedämmungselemente in die untere Schale bei oder vor der Positionierung des Rohrs und der Dichtungen in die Schale eingelegt und Wärmedämmungselemente für die obere Schale werden nach der Positionierung des Rohrs und der Dichtungen eingebracht. Wird ausnahmsweise doch ein Isolationsmaterial in Form eines expandierenden Materials, wie Polyurethanschaum, verwendet, so verhindern die Dichtungen auf bekannte Weise den Austritt des Isolationsmaterials aus dem Gehäuse. Das Ausschäumen ist dem Fachmann aus WO 2008/019790 grundsätzlich bekannt und wird hier nicht genauer erläutert.

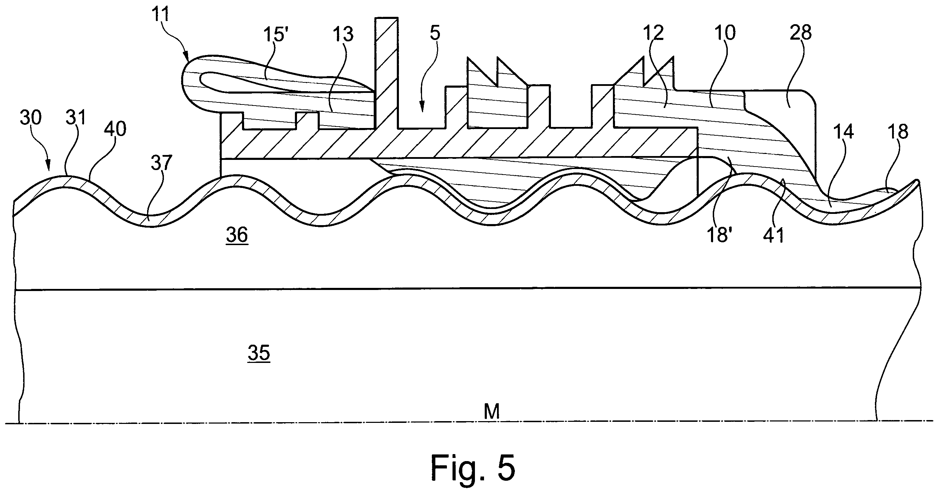

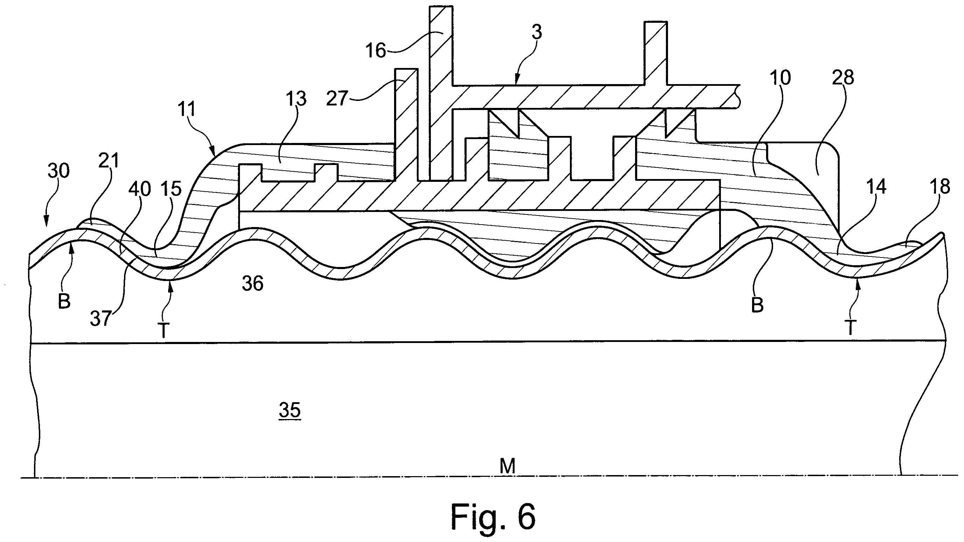

Gemäss der vorliegenden Erfindung sind die Dichtungen 5 speziell ausgebildet, um die eingangs genannten Vorteile zu erzielen. Figur 2 zeigt ein Ausführungsbeispiel einer solchen Dichtung 5. Diese Dichtung ist aus mindestens drei Teilen gebildet. Ein erster ringförmiger Teil 7 besteht aus einem Hartkunststoff, z.B. aus Polypropylen oder bevorzugt aus Acrylnitril-Butadien-Styrol (ABS) oder einem anderen dem Fachmann bekannten Hartkunststoff. Dieser ringförmige Teil 7 ist vorzugsweise einstückig. Der ringförmige Teil 7 kann aber auch aus mehreren formschlüssig oder nach dem Einbau in das Gehäuse nur kraftschlüssig verbundenen Einzelteilen aufgebaut sein. Der ringförmige Teil 7 weist einen Durchmesser auf, der grösser als das durch ihn in das Gehäuse eintretende Rohr. Es können Mittel vorgesehen sein, die den ringförmigen Teil 7 beim Aufschieben auf das Rohr und auch bei der späteren Montage der Rohre im Gehäuse 3 um das Rohr herum zentrieren. Dies können insbesondere einzelne parallel zur Mittellängsachse M verlaufende Stege 8 sein, die auf der Innenseite des Teils 7 angeordnet sind und sich von dort um einen Betrag (die Höhe h des Stegs) radial nach innen zur Mittellängsachse M erstrecken, so dass das Rohr an diesen Stegen anliegt. Die Stege sind dabei vorzugsweise elastisch verformbar, so dass sie sich an die Aussenform des Rohrs, insbesondere an eine gewellte Form des Rohrs anpassen (Figuren 5 und 6).

An dem starren Teil 7 ist das zweite bzw. äussere Dichtelement 11 angeordnet. Dieses weist insbesondere einen ringförmigen Befestigungsabschnitt 13 auf, mit dem das Dichtelement 11 am starren Teil 7 befestigt ist. Dies erfolgt vorzugsweise formschlüssig, in diesem Beispiel mit den ringförmigen Flanschen 23 und 24 des Teils 7, welche in entsprechende Nuten des Dichtelements 11 eingreifen, und/oder es erfolgt nur kraftschlüssig, wenn die Flansche nicht vorgesehen sind, indem das Dichtelement an seinem Befestigungsabschnitt elastisch aufgeweitet wird, wenn es auf dem ringförmigen Teil 7 montiert wird. Die Rückstellkraft des Befestigungsabschnitts 13 ergibt dann einen Kraftschluss zwischen dem Teil 7 und dem Dichtelement 11. Das Dichtelement 11 weist ferner den Dichtabschnitt 15 auf, welcher ringförmig ist und einen sich vom Teil 7 entfernenden Aussenkonus 17 bildet. Bevorzugt ist der Abschnitt 15 ferner in sich selber auch konisch nach aussen bzw. zu seiner runden Öffnung 19 hin konisch zulaufend ausgebildet, so dass der Dichtabschnitt 15 des Dichtelements zur Öffnung 19 der Dichtung 5 hin dünner wird. An seinem die Öffnung 19 begrenzenden Ende bildet der Abschnitt 15 des Dichtelements 11 eine Dichtlippe 21, die ohne Kontakt zu einem Rohr, so wie in den Figuren 2, 3 und 4 dargestellt, eine im Wesentlichen vertikal zur Mittellängsachse M liegende Ruhestellung aufweist. Das Dichtelement 11 kommt im montierten Zustand der Dichtung aussen am Gehäuse zu liegen. Dies betrifft in den gezeigten bevorzugten Beispielen sowohl den Befestigungsabschnitt 13 als auch den Dichtabschnitt 15, so dass das ganze Dichtelement 11 ausserhalb des Gehäuses 3 liegt. Es ist möglich, dass über das Dichtelement 11 nach der Montage der Rohre und des Gehäuses ein weiteres rohrförmiges Element angeordnet wird, um das Dichtelement 11 gegen Einflüsse des Erdreichs zu schützen, insbesondere beim Verfüllen der Grube, in welcher die Gehäuseanordnung liegt. Ein solcher zusätzlicher Schutz gehört aber nicht zur Gehäuseanordnung und insbesondere nicht zum Gehäuse 3, so dass das Dichtelement 11 trotzdem als ausserhalb des Gehäuses liegend anzusehen ist.

Das zweite Dichtelement 11 kann insbesondere aus Ethylen-Propylen-Dien-Kautschuk (EPDM) oder einem thermoplastischen Elastomer (TPE) bestehen. Bevorzugt weist das zweite Dichtelement eine Shore-D Härte im Bereich von 10 bis 50 und insbesondere eine Shore-D Härte von 20 bis 35 auf.

Die Dichtung 5 weist weiter ein erstes bzw. inneres Dichtelement 10 auf, welches bei montierter Dichtung im inneren des Gehäuses 3 zu liegen kommt. Dieses Dichtelement 10 kann, wie in Figur 2 dargestellt, einen Befestigungsabschnitt 12 umfassen, der im Wesentlichen kraftschlüssig am starren ringförmigen Teil 7 befestigt ist. Auch hierbei kann eine zusätzliche Formschlussverbindung vorgesehen sein. Vom Befestigungsabschnitt 12 ragt der Dichtabschnitt 14 in Richtung auf die Mittellängsachse M konisch zusammenlaufend ab. Dieser Abschnitt bildet eine Öffnung 20 im Gehäuse für das dort befindliche Rohr und der Abschnitt 14 des Dichtelements 10 ist zur Anlage an das Rohr dimensioniert und angeordnet. Der Dichtabschnitt 14 bildet um die Öffnung 20 herum ebenfalls eine in Ruhestellung im Wesentlichen vertikal zur Mittellängsachse M angeordnete Dichtlippe 18 aus. Eine ringförmige Erhebung 18' kann innen an dem Abschnitt 14 vorgesehen sein und bildet ein weiteres Dichtmittel, welches das Rohr beaufschlagt (Figuren 5 und 6).

Einzelne axiale Verstärkungsrippen 28 des Dichtelements 10 sind auf an sich bekannte Weise vorgesehen, um gegen axiale Bewegungen des Rohrs im Falle der Ausschäumung zu wirken (wobei eine Ausschäumung vorliegend in der Regel nicht beabsichtigt und nicht notwendig ist, aber dennoch vorgenommen werden kann) und um gegen ein Umstülpen des Dichtungselements zu wirken. Diese Rippen 28 sollen aber die Umfangsspannung des Dichtelements im Wesentlichen nicht erhöhen, um das Aufschieben der Dichtung auf das Rohr nicht zu behindern.

Das erste Dichtelement 10 kann insbesondere aus Ethylen-Propylen-Dien-Kautschuk (EPDM) oder einem thermoplastischen Elastomer (TPE) bestehen. Bevorzugt weist das erste Dichtelement eine Shore-D Härte im Bereich von 10 bis 50 und insbesondere eine Shore-D Härte von 20 bis 35 auf.

Aussen am ringförmigen Teil 7 und somit zur Innenwandung der Abdeckungsschalen bzw. des Gehäuses 3 weisend können weitere Dichtelemente 25 und 26 angeordnet sein. Insbesondere kann ein solches nach aussen weisendes Dichtelement, hier das Element 26, einstückig mit dem ersten Dichtelement 10 der Dichtung 5 ausgeführt sein.

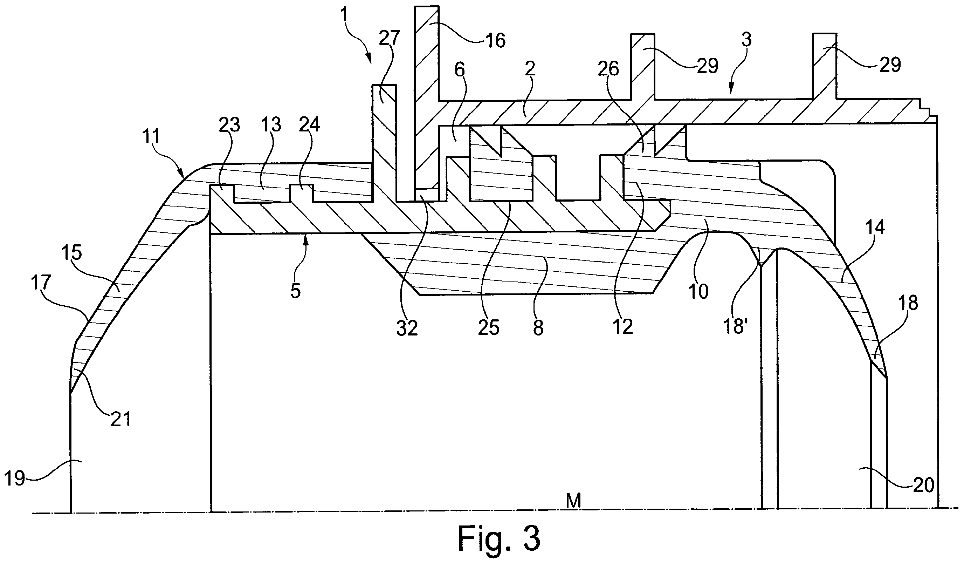

Figur 3 zeigt eine im Wesentlichen gleiche Ausführungsform einer Dichtung 5, worin auch gleiche Bezugszeichen wie in Figur 2 gleiche oder funktionsgleiche Teile bezeichnen. Im Beispiel von Figur 3 sind die Stege 8 zur Zentrierung der Dichtung auf dem Rohr einstückig mit dem ersten Dichtelement 10 ausgeführt.

Figur 3 zeigt ferner einen Teil der oberen Abdeckungsschale 2, welche mit der unteren Schale, die unterhalb der Mittellängsachse M liegt, das Gehäuse 3 bildet. In dieser Figur kann weiter auf den ringförmigen nach aussen weisenden Flansch 27 der Dichtung 5 hingewiesen werden. Dieser kann einstückig mit dem starren Teil 7 gebildet sein und stellt eine Montagehilfe dar, indem er dem Monteur klar angibt, dass das Dichtelement 11 das aussen am Gehäuse zu positionierende Dichtelement ist und den Monteur somit anweist, die Dichtung mit dem Flansch 27 voraus auf das Rohr zu schieben. Der Flansch 27 verunmöglicht auch die Montage der Gehäuseanordnung, sollte die Dichtung doch falsch auf dem Rohr angeordnet worden sein.

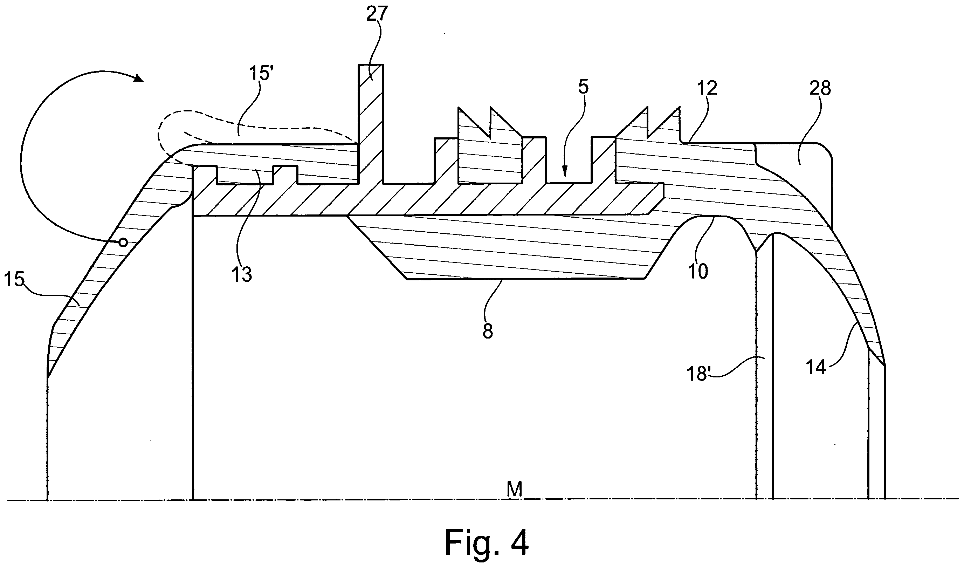

Beim Aufschieben der Dichtung 5 auf das Rohr muss sichergestellt werden, dass das Dichtelement 11 am Ende der Montage richtig auf dem Rohr zu liegen kommt. Eine bevorzugte Ausgestaltung der Dichtung 5 ist daher, dass das Dichtelement 11 mit seinem dichtenden Abschnitt 15 umgestülpt bzw. umgekrempelt werden kann, so dass der Abschnitt 15 aussen auf dem Befestigungsabschnitt 13 zu liegen kommt. In den Vertikalschnittansichten der Figuren 4 und 5 zeigt sich dies als ein "Umklappen" des Abschnitts 15 nach oben in Richtung auf den Steg 27 hin und der umgeklappte Abschnitt ist als 15' in Figur 4 angedeutet und in Figur 5 so dargestellt. Die Geometrie und die Materialeigenschaften des Dichtelements 11 werden vorzugsweise so gewählt, dass der Abschnitt 15' eine Ruhelage einnimmt, wenn er wie in den Figuren 4 und 5 gezeigt umgeklappt ist. Es kann dann ohne weitere Massnahmen die Dichtung 5 auf das Rohr 30 aufgeschoben werden, wie in Figur 5 ersichtlich. Das Dichtelement 11 behindert dabei das Aufschieben nicht und behindert auch nicht die Positionierung des Rohrs und der Dichtung 5 im Gehäuse. Das erste bzw. innere Dichtelement 10 verformt sich in Aufschieberichtung auf bekannte Weise. Das zweite bzw. äussere Dichtelement 11 kann aber auch so ausgeführt sein, dass es nach dem Umklappen keine Ruhestellung einnimmt, so dass es durch eine Massnahme, wie z.B. einen Gurt oder einen Kabelbinder, der aussen um den umgeklappten Teil 15' fixiert wird, gegen ein Zurückklappen gesichert werden muss.

In jedem Fall wird nach der Montage der Rohre im Gehäuse und der Positionierung der Dichtungen 5 an den Eintrittsöffnungen 32 des Gehäuses 3 der jeweilige Abschnitt 15 zurückgeklappt bzw. zurückgestülpt, so dass sich bei jeder Dichtung 5 dieser Abschnitt 15 an der Aussenseite 31 des Rohrs 30 anlegt. Das Rohr ist in den Figuren mit dem Innenrohr 35, der Wärmedämmung 36 und dem Aussenmantel 37, der die Aussenfläche 31 des Rohrs bildet nur oberhalb der Mittellängsachse M dargestellt. Das Rohr ist als ein Wellrohr mit den Wellenbergen B und den Wellentälern T dargestellt.

Bei allen Ausführungsformen ist es möglich, ein zusätzliches Befestigungselement vorzusehen, welches um den jeweiligen zweiten bzw. äusseren Dichtabschnitt herum angeordnet wird und diesen zusätzlich zu seiner Eigenspannung gegen das Rohr presst. Dies kann ein Gurt oder ein anderes umlaufendes Befestigungselement sein.

Mit Ausführungsformen der Erfindung kann eine Rohrverbindung so gegen Wasser geschützt werden, dass nach einer Beaufschlagung mit 30 kPa während 24 Stunden keine Feuchtigkeit in das Gehäuse eindringt. Es ergibt sich ein Dichtungsvermögen gegen von aussen drückende Flüssigkeiten, das deutlich oberhalb der Werte der geltenden Norm EN 489:2009 liegen kann.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Gehäuseanordnung (1) für die Verbindungsstelle von Rohren (30), umfassend mindestens zwei Abdeckungsschalen (2), die zur Aufnahme der Rohre bestimmt und derart ausgebildet sind, dass sie in einem aneinander befestigten Zustand die Rohre als Gehäuse (3) umgeben, sowie umfassend Dichtungen (5) an den für die Rohre bestimmten Eintrittsöffnungen (32) des Gehäuses (3), welche Dichtungen jeweils mindestens ein erstes ringförmiges, elastisches Dichtelement (10) aufweisen, welches zur Beaufschlagung des jeweiligen Rohrs (30) an seiner Rohraussenseite (31) im Gehäuseinneren bestimmt und angeordnet ist, **dadurch gekennzeichnet, dass** die Dichtungen (5) jeweils mindestens ein zweites ringförmiges Dichtelement (11) aufweisen, welches zur Beaufschlagung der Rohraussenseite (31) des jeweiligen Rohrs ausserhalb des Gehäuses bestimmt und angeordnet ist.

2. Gehäuseanordnung nach Anspruch 1, **dadurch gekennzeichnet, dass** die jeweilige Dichtung (5) einen ringförmigen starren Träger (7) aufweist, an welchem die elastischen Dichtelemente (10; 11) jeweils mit einem Befestigungsabschnitt (12; 13) des Dichtelements befestigt sind, an welchen Befestigungsabschnitt jeweils mindestens ein zur Beaufschlagung der Rohraussenseite bestimmter erster bzw. zweiter Dichtabschnitt (14; 15) anschliesst.

3. Gehäuseanordnung nach Anspruch 2, **dadurch gekennzeichnet, dass** das der Dichtabschnitt (15) des zweiten Dichtelements (11) aus seiner vorgegebenen, zur Beaufschlagung der Rohraussenseite (31) bestimmten Grundstellung umstülpbar ist, derart, dass der Dichtabschnitt (15) aus seiner Grundstellung auf den Befestigungsabschnitt (13) hin umlegbar und aus dieser Stellung wieder zurück in die Grundstellung bringbar ist.

4. Gehäuseanordnung nach einem der Ansprüche 1 bis 3, **dadurch gekennzeichnet, dass** die Dichtabschnitte (14; 15) in ihrer unbelasteter Grundstellung jeweils eine konische Form aufweisen, wobei sich die Dichtabschnitte e vom jeweiligen Befestigungsabschnitt (12; 13) weg und in Richtung auf die Mittellängsachse M der Dichtung (5) erstrecken.

5. Gehäuseanordnung nach einem der Ansprüche 1 bis 4, **dadurch gekennzeichnet, dass** innen an dem Dichtabschnitt (14) des ersten Dichtelements (10) eine ringförmige Erhebung (18') vorgesehen ist.

6. Gehäuseanordnung nach einem der Ansprüche 1 bis 5, **dadurch gekennzeichnet, dass** die Dichtelemente (10; 11) eine Härte im Bereich von 10 Shore-D bis 50 Shore-D aufweisen und insbesondere eine Härte von 20 bis 35 Shore-D aufweisen.

7. Gehäuseanordnung nach einem der Ansprüche 1 bis 6, **dadurch gekennzeichnet, dass** die Dichtelemente (10; 11) aus Ethylen-Propylen-Dien-Kautschuk (EPDM) oder aus einem thermoplastischen Elastomer (TPE) gebildet sind.

8. Verfahren zum Schutz der Verbindung von wärmegedämmten, erdverlegten Rohren (30), welche mindestens ein Innenrohr (35), eine Wärmedämmung (36) und einen Aussenmantel (37) aufweisen, wobei vor der Verbindung der Innenrohre auf jedes Rohr eine ringförmige Dichtung (5) aufgeschoben wird, die Innenrohre nach Entfernung des Aussenmantels und der Wärmedämmung in einem Abschnitt des Verbindungsbereichs miteinander fluiddicht verbunden werden und der Verbindungsbereich in das aus mindestens zwei Abdeckungsschalen (2) gebildete Gehäuse (3) einer Gehäuseanordnung nach einem der Ansprüche 1 bis 7 eingebracht wird, wobei die Dichtungen (5) an den Eintrittsstellen (32) der Rohre in das Gehäuse positioniert werden, wobei die ringförmigen Dichtungen (5) einen ringförmigen starren Träger (7) und auf der gehäuseinnenseitigen Seite des Trägers mindestens ein erstes elastisches Dichtelement (10) mit einem gehäuseinneren ersten Dichtabschnitt (14) aufweisen, wobei die ringförmigen Dichtungen (5) auf der anderen Seite des Trägers mindestens ein zweites elastisches Dichtelement (11) mit einem zweiten Dichtabschnitt (15) aufweisen, welche Dichtabschnitte einen ringförmigen Durchlass für das Rohr definieren, der kleiner als der Durchmesser des Rohrs ist, wobei zum Aufschieben der Dichtungen (5) auf das Rohr (30) der zweite Dichtabschnitt (15) auf sich selber umgestülpt wird und die Dichtung mit dem umgestülpten Dichtabschnitt (15') voraus auf das Rohr aufgeschoben wird, und dass nach der Positionierung der Rohrverbindung im Gehäuse der umgestülpte Dichtabschnitt zurückgestülpt wird.

9. Verfahren gemäss Anspruch 8, **dadurch gekennzeichnet, dass** der Gehäusehohlraum zwischen den Abdeckungsschalen und dem Rohr nicht mit Wärmedämmmaterial gefüllt wird.

10. Verfahren gemäss Anspruch 8, **dadurch gekennzeichnet, dass** der Gehäusehohlraum zwischen den Abdeckungsschalen und dem Rohr mindestens teilweise mit vorgeformten Wärmedämmteilen gefüllt wird.

11. Verfahren gemäss Anspruch 8, **dadurch gekennzeichnet, dass** der Gehäusehohlraum zwischen den Abdeckungsschalen und dem Rohr mit einem schaumbildenden Wärmedämmmaterial gefüllt wird.

12. Verfahren nach einem der Ansprüche 8 bis 11, **dadurch gekennzeichnet, dass** der Dichtabschnitt (15) des zweiten Dichtelements (11) mit einem den Dichtabschnitt umschlingenden Befestigungsmittel gegen die Rohroberfläche (31) gepresst wird.

13. Gehäuseanordnung nach einem der Ansprüche 1 bis 7, **dadurch gekennzeichnet, dass** die Dichtung (5) jeweils das mindestens eine erste ringförmige, elastische Dichtelement (10) aufweist, welches zur Beaufschlagung des jeweiligen Rohrs (30) an seiner Rohraussenseite (31) im Gehäuseinneren bestimmt ist und dazu im Gehäuseinneren angeordnet ist, wobei die jeweilige Dichtung (5) einen ringförmigen starren Träger (7) aufweist, an welchem das mindestens eine erste elastische Dichtelement (10) jeweils mit einem Befestigungsabschnitt (12) des Dichtelements befestigt ist, an welchen Befestigungsabschnitt jeweils mindestens ein zur Beaufschlagung der Rohraussenseite bestimmter erster Dichtabschnitt (14) anschliesst, wobei die Dichtung (5) jeweils das mindestens eine zweite ringförmige Dichtelement (11) aufweist, welches zur Beaufschlagung der Rohraussenseite (31) des jeweiligen Rohrs ausserhalb des Gehäuses angeordnet ist, und dass das mindestens eine zweite elastische Dichtelement (11) jeweils mit einem Befestigungsabschnitt (13) des Dichtelements an dem ringförmigen starren Träger (7) befestigt ist, an welchen Befestigungsabschnitt (13) jeweils mindestens ein zur Beaufschlagung der Rohraussenseite bestimmter zweiter Dichtabschnitt (15) anschliesst, und wobei der Dichtabschnitt (15) des zweiten Dichtelements (11) aus seiner vorgegebenen, zur Beaufschlagung der Rohraussenseite (31) bestimmten Grundstellung umstülpbar ist, derart, dass der Dichtabschnitt (15) aus seiner Grundstellung auf den Befestigungsabschnitt (13) hin umlegbar und aus dieser Stellung wieder zurück in die Grundstellung bringbar ist.

14. Gehäuseanordnung nach Anspruch 13, **dadurch gekennzeichnet, dass** die Dichtabschnitte (14; 15) in ihrer unbelasteter Grundstellung jeweils eine konische Form aufweisen, wobei sich die Dichtabschnitte vom jeweiligen Befestigungsabschnitt (12; 13) weg und in Richtung auf die Mittellängsachse M der Dichtung (5) erstrecken.

15. Gehäuseanordnung nach einem der Ansprüche 13 oder 14, **dadurch gekennzeichnet, dass** innen an dem Dichtabschnitt (14) des ersten Dichtelements (10) ein ringförmiges weiteres Dichtmittel (18') vorgesehen ist.

## Claims

1. Housing arrangement (1) for the connection location of pipes (30), comprising at least two cover shells (2) intended for receiving the pipes and adapted to surround the pipes as housing (3) in a state in which they are connected to one another, as well as comprising sealings (5) at the inlet openings (32) of the housing (3) intended for the pipes, wherein the sealings have each at least a first annular and elastic sealing element (10) intended and arranged for impinging the respective pipe (30) on the outside of the pipe (31) inside the housing, **characterized in that** the sealings (5) have each at least a second annular sealing element (11) intended and arranged for impinging the outside of the respective pipe (31) on the outside of the housing.

2. Housing arrangement according to claim 1, **characterized in that** the respective sealing (5) has an annular rigid holder (7), to which the elastic sealing elements (10; 11) are each attached with an attachment section (12; 13) of the sealing element, wherein at least a first or a second sealing section (14; 15), respectively, intended for impinging the outside of the pipe, follows the attachment section.

3. Housing arrangement according to claim 2, **characterized in that** the sealing section (15) of the second sealing element (11) can be everted from its preset basic position for impinging the outside of the pipe (31) in such a way that the sealing section (15) can be flipped from its basic position onto the attachment section (13) and can be brought back to the basic position from this position.

4. Housing arrangement according to one of the claims 1 to 3, **characterized in that** the sealing sections (14; 15) have each a conical shape in their unloaded basic position, wherein the sealing sections extend away from the respective attachment section (12; 13) and in a direction towards the longitudinal middle axis M of the sealing (5).

5. Housing arrangement according to one of the claims 1 to 4, **characterized in that** an annular elevation (18') is provided inside at the sealing section (14) of the first sealing element (10).

6. Housing arrangement according to one of the claims 1 to 5, **characterized in that** the sealing elements (10; 11) have a hardness in the range of 10 Shore-D to 50 Shore-D and particularly a hardness between 20 and 35 Shore-D.

7. Housing arrangement according to one of the claims 1 to 6, **characterized in that** the sealing elements (10; 11) are formed of ethylene-propylene-diene-rubber (EPDM) or of a thermoplastic elastomer (TPE).

8. Method for protecting the connection of heat-insulated underground pipes (30), having at least an inner pipe (35), a heat insulation (36) and an outer shell (37), wherein an annular sealing (5) is pushed onto each pipe before the connection of the inner pipes, the inner pipes are connected to one another in a fluid-tight way after removing the outer shell and the heat insulation in a section of the connection area and the connection section is inserted into the housing (3) of a housing arrangement according to one of the claims 1 to 7, formed by at least two cover shells (2), wherein the sealings (5) are positioned at the inlet locations (32) of the pipes in the housing, wherein the annular sealings (5) have an annular rigid holder (7) and at least one first elastic sealing element (10) with a first sealing section (14) inside the housing on the side of the holder which is inside the housing, wherein the annular sealings (5) have at least a second elastic sealing element (11) with a second sealing section (15) on the other side of the holder, wherein the sealing sections define an annular passage for the pipe, which is smaller than the diameter of the pipe, wherein the second sealing section (15) is everted onto itself for pushing the sealings (5) onto the pipe (30) and the sealing is pushed onto the pipe with the leading everted section (15') and in that after positioning the pipe connection into the housing the everted sealing section is everted back.

9. Method according to claim 8, **characterized in that** the housing cavity between the cover shells and the pipe is not filled with heat-insulating material.

10. Method according to claim 8, **characterized in that** the housing cavity between the cover shells and the pipe is filled at least partially with pre-shaped heat-insulating parts.

11. Method according to claim 8, **characterized in that** the housing cavity between the cover shells and the pipe is filled with foam-producing heat-insulating material.

12. Method according to one of the claims 8 to 11, **characterized in that** the sealing section (15) of the second sealing element (11) is pressed against the pipe surface (31) with an attachment means surrounding the sealing section.

13. Housing arrangement according to one of the claims 1 to 7, **characterized in that** the sealing (5) has the at least one first annular elastic sealing element (10) intended for impinging the respective pipe (30) on the outside (31) of its pipe inside the housing and is arranged inside the housing for this, wherein the respective sealing (5) has an annular rigid holder (7) to which the at least one first elastic sealing element (10) is attached with an attachment section (12) of the sealing element, wherein at least a first sealing section (14) intended for impinging the outside of the pipe follows the attachment section, wherein the sealing (5) has the at least one second annular sealing element (11) which is arranged outside the respective pipe for impinging the outside (31) of the pipe, and **in that** the at least one second elastic sealing element (11) is attached with an attachment section (13) of the sealing element to the annular rigid holder (7), wherein at least a second sealing section (15) intended for impinging the outside of the pipe follows the attachment section, and wherein the sealing section (15) of the second sealing element (11) can be everted from its preset basic position for impinging the outside (31) of the pipe in such a way that the sealing section (15) can be flipped over from its basic position onto the attachment section (13) and can be brought back to the basic position from this position.

14. Housing arrangement according to claim 13, **characterized in that** the sealing sections (14; 15) have each a conical shape in their unloaded basic position, wherein the sealing sections extend away from the respective attachment section (12; 13) and in the direction towards the longitudinal middle axis M of the sealing (5).

15. Housing arrangement according to one of the claims 13 or 14, **characterized in that** a further annular sealing means (18') is provided inside at the sealing section (14) of the first sealing element (10).

## Revendications

1. Agencement de carcasse (1) pour le lieu de connexion de tuyaux (30), comprenant au moins deux enveloppes de couverture (2) prévues pour recevoir les tuyaux et adaptées à entourer les tuyaux comme carcasse (3) dans un état dans lequel elles sont connectées l'une à l'autre, ainsi que comprenant de scellages (5) aux ouvertures d'entrée (32) de la carcasse (3) prévus pour les tuyaux, les scellages ayant chacun au moins un premier élément de scellage (10) annulaire et élastique prévu er arrangé pour empiéter sur le respectif tuyau (30) du côté extérieur du tuyau (31), à l'intérieur de la carcasse, **caractérisé en ce que** les scellages (5) ont chacun au moins un deuxième élément de scellage annulaire (11) prévu et arrangé pour empiéter sur le côté extérieur du respectif tuyau (31) du côté extérieur de la carcasse.

2. Agencement de carcasse selon la revendication 1, **caractérisé en ce que** le respectif scellage (5) a un porteur annulaire rigide (7), sur lequel les éléments de scellage élastiques (10; 11) sont chacun attachés avec une section d'attachement (12; 13) de l'élément de scellage, au moins une première ou bien une deuxième section de scellage (14; 15), prévue pour empiéter sur le côté extérieur du tuyau, suit la section d'attachement.

3. Agencement de carcasse selon la revendication 2, **caractérisé en ce que** la section de scellage (15) du deuxième élément de scellage (11) peut être renversée à partir de sa position de base pour empiéter sur l'extérieur du tuyau (31) de sorte que la section de scellage (15) peut être retournée de sa position de base sur la section d'attachement (13) et peut être remise dans position de base à partir de cette position.

4. Agencement de carcasse selon l'une des revendications 1 à 3, **caractérisé en ce que** les sections de scellage (14; 15) ont chacune une forme conique dans leur position de base non chargée, les sections de scellage s'étendant en s'éloignant de la respective section d'attachement (12; 13) et dans une direction vers l'axe longitudinal moyen M du scellage (5).

5. Agencement de carcasse selon les revendications 1 à 4, **caractérisé en ce qu'**une élévation annulaire (18') est prévue à l'intérieur de la section de scellage (14) du premier élément de scellage (10).

6. Agencement de carcasse selon l'une des revendications 1 à 5, **caractérisé en ce que** les éléments de scellage (10; 11) ont une dureté dans la gamme entre 10 Shore-D et 50 Shore-D et particulièrement une dureté comprise entre 20 et 35 Shore-D.

7. Agencement de carcasse selon l'une des revendications 1 à 6, **caractérisé en ce que** les éléments de scellage (10; 11) sont en éthylène-propylène-diène-caoutchouc (EPDM) ou en un élastomère thermoplastique (TPE).

8. Procédé de protection de la connexion de tuyaux souterrains isolés thermiquement (30), ayant au moins un tuyau intérieur (35), une isolation thermique (36) et une enveloppe extérieure (37), un scellage annulaire (5) étant poussé sur chaque tuyau avant la connexion des tuyaux intérieurs, les tuyaux intérieurs étant connectés l'un à l'autre de manière étanche au fluide après avoir enlevé l'enveloppe extérieure et l'isolation thermique dans une section de la zone de connexion et la section de connexion étant introduite dans la carcasse (3) d'un agencement de carcasse selon l'une des revendications 1 à 7, formée par au moins deux enveloppes de couverture (2), les scellages (5) étant positionnés aux lieux d'entrée (32) des tuyaux dans la carcasse, les scellages annulaires (5) ayant un porteur annulaire rigide (7) et au moins un premier élément de scellage élastique (10) avec une première section de scellage (14) à l'intérieur de la carcasse du côté du porteur qui est à l'intérieur de la carcasse, les scellages annulaires (5) ayant au moins un deuxième élément de scellage élastique (11) avec une deuxième section de scellage (15) de l'autre côté du porteur, les section de scellage définissant un passage annulaire pour le tuyau, qui est inférieur par rapport au diamètre du tuyau, la deuxième section de scellage (15) étant retournée sur elle-même afin de pousser les scellages (5) sur le tuyau (30) et le scellage étant poussé sur le tuyau avec la section retournée en avant (15') et en ce que la section de scellage retournée est retournée à la position initiale après avoir positionné la connexion du tuyau dans la carcasse.

9. Procédé selon la revendication 8, **caractérisé en ce que** la cavité de carcasse entre les enveloppes de couverture et le tuyau n'est pas remplie avec du matériau d'isolation thermique.

10. Procédé selon la revendication 8, **caractérisé en ce que** la cavité de carcasse entre les enveloppes de couverture et le tuyau est remplie au moins partiellement avec des pièces d'isolation thermique préformées.

11. Procédé selon la revendication 8, **caractérisé en ce que** la cavité de carcasse entre les enveloppes de couverture et le tuyau est remplie avec du matériau d'isolation thermique qui produit de la mousse.

12. Procédé selon l'une des revendications 8 à 11, **caractérisé en ce que** la section de scellage (15) du deuxième élément de scellage (11) est pressée contre la surface de tuyau (31) avec des moyens d'attachement qui entourent la section de scellage.

13. Agencement de carcasse selon l'une des revendications 1 à 7, **caractérisé en ce que** le scellage (5) a l'au moins un premier élément annulaire élastique (10) prévu pour empiéter sur le respectif tuyau (30) du côté extérieur (31) de son tuyau à l'intérieur de la carcasse et est arrangé à l'intérieur de la carcasse pour cela, le respectif scellage (5) ayant une porteur annulaire rigide (7) auquel l'au moins un premier élément annulaire élastique (10) est attaché avec une section d'attachement (12) de l'élément de scellage, au moins une première section de scellage (14), prévue pour empiéter sur le côté extérieur du tuyau, suivant la section d'attachement, le scellage (5) ayant l'au moins un deuxième élément annulaire élastique (11) arrangé hors du respectif tuyau afin d'empiéter sur l'extérieur (31) du tuyau, et **en ce que** l'au moins un deuxième élément annulaire élastique (11) est attaché avec une section d'attachement (13) de l'élément de scellage à un porteur annulaire rigide (7), au moins une deuxième section de scellage (15), prévue pour empiéter sur l'extérieur du tuyau, suit la section d'attachement, et la section de scellage (15) du deuxième élément de scellage (11) pouvant être retournée à partir de sa position de base préétablie afin d'empiéter sur l'extérieur (31) du tuyau de sorte que la section de scellage (15) peut être renversée à partir de sa position de base sur la section d'attachement (13) et peut être retournée dans la position de base à partir de cette position.

14. Agencement de carcasse selon la revendication 13, **caractérisé en ce que** les sections de scellage (14; 15) ont chacune une forme conique dans leur position de base non-chargée, les sections de scellage s'étendant en s'éloignant de la respective section d'attachement (12; 13) et dans la direction vers l'axe longitudinal moyen M du scellage (5).

15. Agencement de carcasse selon l'une des revendications 13 ou 14, **caractérisé en ce qu'**un autre moyen de scellage annulaire (18') est prévu à l'intérieur de la section de scellage (14) du premier élément de scellage (10).
